# EUROPÄISCHE PATENTSCHRIFT

(11) **EP 2 943 866 B1**
(45) Veröffentlichungstag und Bekanntmachung des Hinweises auf die Patenterteilung: **31.03.2021**
(21) Anmeldenummer: 13802652.1
(22) Anmeldetag: 11.12.2013
(51) Int. Cl.: G06F 3/0482

(54) **VERFAHREN UND VORRICHTUNG ZUM BEREITSTELLEN EINER BENUTZERSCHNITTSTELLE IN EINEM FAHRZEUG**
METHOD AND DEVICE FOR PROVIDING A USER INTERFACE IN A VEHICLE
PROCÉDÉ ET DISPOSITIF PERMETTANT DE FOURNIR UNE INTERFACE UTILISATEUR DANS UN VÉHICULE

(30) Priorität: 10.01.2013 DE 102013000880
(43) Veröffentlichungstag der Anmeldung: 18.11.2015
(73) Patentinhaber: Volkswagen Aktiengesellschaft, 38440 Wolfsburg (DE)
(72) Erfinder: HAHN, Alexander, 38104 Braunschweig (DE); BACHORSKI, Tomasz, 38176 Wendeburg (DE)
(86) Internationale Anmeldenummer: PCT/EP2013/076212
(87) Internationale Veröffentlichungsnummer: WO 2014/108268

(56) Entgegenhaltungen:
- GB-A- 2 434 068
- US-A1- 2010 211 872
- US-A1- 2011 296 351

## Beschreibung

Die vorliegende Erfindung trifft ein Verfahren zum Bereitstellen einer Benutzerschnittstelle in einem Fahrzeug. Bei dem Verfahren sind Informationen anzeigebar, die in Listen strukturiert sind, wobei eine Liste eine Vielzahl von Listeneinträgen umfasst und mehrere Listeneinträge jeweils eine Vielzahl von Elementen umfasst. Ferner betrifft die Erfindung eine Vorrichtung zum Bereitstellen einer Benutzerschnittstelle in einem Fahrzeug. Diese weist eine Anzeigevorrichtung mit einer Anzeigefläche auf. Ferner umfasst die Vorrichtung einen Speicher zum Speichern einer Liste, die eine Vielzahl von Listeneinträgen umfasst, die wie vorstehend angegeben strukturiert sind. Des Weiteren umfasst die Vorrichtung eine Eingabevorrichtung, die von einem Nutzer betätigbar ist, um eine angezeigte Teilmenge mit Listeneinträgen und eine angezeigte Teilmenge mit Elementen durch einen Bedienvorgang zu verändern. Außerdem umfasst die Vorrichtung eine Steuervorrichtung, die mit der Anzeigevorrichtung, dem Speicher und der Eingabevorrichtung gekoppelt ist und mittels welcher die Anzeige auf der Anzeigefläche in Abhängigkeit von einem mittels der Eingabevorrichtung getätigten Bedienvorgang steuerbar ist.

Bei der Informationsanzeige in einem Fahrzeug ergibt sich das Problem, dass sehr große Datenbestände visualisiert werden müssen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geografische Straßenkarten mit einer Route und gegebenenfalls vielfältigen Zusatzinformationen angezeigt werden. Schließlich umfassen moderne Fahrzeuge Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen. Dabei ergeben sich bei der Anzeige von Information in einem Fahrzeug und für die Bedienung der vielfältigen Einrichtungen des Fahrzeugs sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Die Darstellung von Information in einem Fahrzeug erfolgt beispielsweise dadurch, dass eine Teilmenge einer Gesamtinformation auf der Anzeigefläche in dem Fahrzeug angezeigt wird und der Nutzer die Teilmenge verändern kann. Die Gesamtinformation kann beispielsweise eine Liste mit einer Vielzahl von Listeneinträgen betreffen. Von der Gesamtliste wird eine Teilmenge der Listeneinträge angezeigt. Durch einen Bedienvorgang kann der Nutzer einen Bildlauf (Scrollen) hervorrufen, um andere Listeneinträge zur Anzeige zu bringen. Bei dem Bedienvorgang kann der Nutzer beispielsweise eine Bedienbewegung einer bestimmten Länge ausführen. Ferner kann der Nutzer beispielsweise ein Bedienelement für eine bestimmte Bediendauer betätigen. Die Größe bzw. das Maß der Veränderung der angezeigten Information, d. h. in diesem Fall die Anzahl der Positionen, um die sich die Listeneinträge, die angezeigt werden, verändern, hängt in diesem Fall von der Länge der Bedienbewegung bzw. der Bediendauer ab.

Aus der DE 10 2008 052 485 A1 ist ein Verfahren zum Anzeigen von Informationen bekannt, bei dem auf einer Anzeigenfläche eine Teilmenge einer Liste angezeigt wird, die eine Vielzahl von Listeneinträgen umfasst. Die angezeigte Teilmenge der Liste wird bei dem Verfahren durch einen ersten Bedienvorgang eines Nutzers verändert, wobei durch den ersten Bedienvorgang die Listeneinträge der Liste nacheinander durchlaufen werden. Ferner werden nach dem Verfahren durch einen zweiten Bedienvorgang mehrere Listeneinträge übersprungen, um zu einem Listeneintrag zu gelangen, der nicht in der angezeigten Teilmenge der Listeneinträge enthalten ist, die beim Ausführen des zweiten Bedienvorgangs angezeigt wurden. Dabei umfasst der erste Bedienvorgang eine Steuerung einer Bewegung eines Listeneintrags in eine erste Richtung und der zweite Bedienvorgang eine Steuerung einer Bewegung eines Listeneintrags in eine zweite Richtung, die sich von der ersten Richtung unterscheidet.

Die GB 2 434 068 A beschreibt eine Vorrichtung zum Steuern einer Vielzahl elektronischer Einrichtungen mittels einer dreidimensionalen Bedienoberfläche. Dabei wird eine perspektivische Darstellung einer Kugel mit Facetten angezeigt, wobei die Facetten als Bedienflächen ausgebildet sein und eine Beschriftung aufweisen können. Eine Facette kann durch horizontales und vertikales Rollen eines Rollballs (*"track ball"*) angewählt und mittels eines Tasters ausgewählt werden.

Die US 2011/296351 A1 beschreibt ein Verfahren zum Bereitstellen einer Benutzerschnittstelle, bei dem eine Vielzahl von Stapeln mit jeweils einer Vielzahl von Objekten angezeigt wird. Beispielsweise kann ein Stapel für Kontakte, ein Stapel für E-Mails und ein Stapel für einen Kalender angezeigt werden. Durch eine Bedienbewegung in einer ersten Richtung kann ein Bildlauf durch die Objekte des mittleren Stapels erzeugt werden. Durch einen Bedienvorgang in eine zweite Richtung kann ein anderer Stapel in die Mitte bewegt werden.

Die US 2010/0211872 A1 beschreibt ein weiteres Verfahren zum Bereitstellen einer Benutzerschnittstelle. In diesem Fall werden nebeneinander mehrere Stapel mit jeweils mehreren Stapelkarten angezeigt. Ähnlich wie bei dem Verfahren gemäß der US 2011/296351 A1 kann ein Bildlauf durch die Stapelkarten eines Stapels erzeugt werden. Ferner kann der Stapel, welcher in einem sogenannten Interaktionsbereich angezeigt wird, verändert werden.

Es ist daher die Aufgabe der vorliegenden Erfindung, ein Verfahren und eine Vorrichtung der eingangs genannten Art bereitzustellen, mit denen auf einfache und für den Nutzer intuitive Weise eine Veränderung der angezeigten Teilmengen so erfolgen kann, dass der hierfür erforderliche Bedienvorgang so schnell wie möglich durchgeführt werden kann. Ferner soll dem Nutzer ein möglichst geringes Maß an Aufmerksamkeit abverlangt werden.

Diese Aufgabe wird erfindungsgemäß durch ein Verfahren mit den Merkmalen des Anspruchs 1 und eine Vorrichtung mit den Merkmalen des Anspruchs 6 gelöst. Vorteilhafte Aus- und Weiterbildungen ergeben sich aus den Unteransprüchen.

Bei dem erfindungsgemäßen Verfahren wird auf einer Anzeigefläche zumindest eine Teilmenge der Liste so angezeigt, dass eine Vielzahl von Listeneinträgen dieser Liste sich in einer ersten Richtung auf der Anzeigefläche erstreckt. Außerdem wird zu einem Listeneintrag der angezeigten Vielzahl von Listeneinträgen zumindest eine Teilmenge der Elemente dieses einen Listeneintrags so angezeigt, dass es sich die Elemente in einer zweiten Richtung auf der Anzeigefläche erstrecken, die sich von der ersten Richtung unterscheidet. Die angezeigte Teilmenge mit Listeneinträgen der Liste wird bei dem erfindungsgemäßen Verfahren durch einen ersten Bedienvorgang eines Nutzers so verändert, dass die Listeneinträge der Liste nacheinander durchlaufen werden, wobei der erste Bedienvorgang eine Bedienbewegung in die erste Richtung umfasst. Die angezeigte Teilmenge mit Elementen des einen Listeneintrags wird bei dem erfindungsgemäßen Verfahren durch einen zweiten Bedienvorgang des Nutzers so verändert, dass die Elemente des Listeneintrags nacheinander durchlaufen werden, wobei der zweite Bedienvorgang eine Bedienbewegung in die zweite Richtung umfasst. Die Listeneinträge der Liste erstrecken sich dabei perspektivisch in der ersten Richtung nach hinten, wobei die Listeneinträge so perspektivisch dargestellt werden, dass sie gestaffelt hintereinander angeordnet sind, wobei jeder der Listeneinträge die jeweiligen perspektivisch hinter diesem Listeneintrag angeordneten Listeneinträge teilweise verdeckt, so dass von den hinteren Listeneinträgen nur die Ränder sichtbar sind. Bei dem erfindungsgemäßen Verfahren wird nun nur zu dem perspektivisch vorne dargestellten Listeneintrag die Teilmenge der Elemente dieses einen Listeneintrags angezeigt und durch den ersten Bedienvorgang, der eine Wischgeste ist, wird die angezeigte Teilmenge mit Listeneinträgen der Liste ferner so verändert, dass der perspektivisch vorne dargestellte Listeneintrag und die zugehörigen Elemente verschwinden und stattdessen der nächste Listeneintrag perspektivisch im Vordergrund angezeigt wird und die zu diesem nächsten Listeneintrag gehörigen Elemente in der zweiten Richtung auf der Anzeigefläche angezeigt werden, wie zuvor die zu dem perspektivisch vorne dargestellten Listeneintrag gehörigen Elementen angezeigt wurden.

Unter einer *Liste* wird im Sinne der Erfindung ein Datenbestand verstanden, der in eine Vielzahl von Dateneinheiten einteilbar ist. Die Dateneinheiten entsprechen dann den Listeneinträgen. Die Dateneinheiten können in eine bestimmte Reihenfolge gebracht werden, so dass sie dann eine Liste darstellen. Mittels des ersten Bedienvorgangs kann der Nutzer die Listeneinträge der Liste nacheinander durchlaufen. Dabei kann eine Teilmenge der Liste, d. h. mehrere Listeneinträge, an Hand eines grafischen Objekts auf der Anzeigefläche wiedergegeben werden.

Die Liste kann beispielsweise eine Vielzahl von Audio- oder Videodateien umfassen. Ferner kann sie Einträge eines Telefon- oder Adressbuchs, Einträge zu einem Menü einer hierarchischen Menüstruktur zur Bedienung einer Einrichtung oder andere Dateneinheiten betreffen, die sich in einer Liste zusammenfassen und abstrakt an Hand eines grafischen Objekts darstellen lassen.

Bei dem erfindungsgemäßen Verfahren kann der Nutzer besonders einfach und intuitiv die strukturiert in dem Fahrzeug vorliegende Information abrufen. Dabei ist eine zweidimensionale Bedienung möglich, bei der in einer Richtung Listeneinträge angezeigt und ausgewählt werden können und in einer anderen Richtung die Elemente eines Listeneintrags angezeigt und ausgewählt werden können. Ein Bedienvorgang zur Anzeige eines Elements eines bestimmten Listeneintrags lässt sich daher vorteilhafterweise sehr schnell ausführen.

Die Richtungen für die Anzeige der Listeneinträge der Liste und die Anzeige der Elemente eines Listeneintrags können sich in einem bestimmten Winkelbereich auf der Anzeigefläche erstrecken. Gleichermaßen können die Bedienvorgänge in entsprechenden Winkelbereichen ausgeführt werden. Die Richtung der Anzeige muss dabei nicht exakt mit der Richtung der Bedienbewegung des entsprechenden Bedienvorgangs übereinstimmen. Bei dem erfindungsgemäßen Verfahren ist nur wichtig, dass sich die erste und zweite Richtung für die Anzeige auf der Anzeigenfläche unterscheiden und dies für den Nutzer erkennbar ist. Entsprechend ist für die Bedienbewegungen der beiden Bedienvorgänge nur wichtig, dass sie unterschieden werden können und einer entsprechenden Richtung bei der Anzeige der Listeneinträge und der Elemente zugeordnet werden können. Beispielsweise kann die zweite Richtung im Wesentlichen senkrecht zu der ersten Richtung verlaufen. Es ist jedoch auch möglich, dass die erste und die zweite Richtung einen Winkel einschließen, der in einem Bereich vom 70° bis 110° liegt.

Gemäß einer Ausgestaltung des erfindungsgemäßen Verfahrens scrollt man durch den ersten Bedienvorgang durch die Listeneinträge der Liste und durch den zweiten Bedienvorgang durch die Elemente eines Listeneintrags der Liste. Hierdurch wird vorteilhafterweise erreicht, dass die Bedienung für den Nutzer sehr intuitiv ausgeführt werden kann.

Gemäß einer weiteren Ausgestaltung des erfindungsgemäßen Verfahrens wird bei zumindest einem Bedienvorgang eine Bewegung auf einer berührungsempfindlichen Oberfläche einer Eingabevorrichtung erfasst. Bevorzugt wird eine solche Bewegung bei beiden Bedienvorgängen erfasst. Alternativ oder zusätzlich kann bei zumindest einem Bedienvorgang, insbesondere bei beiden Bedienvorgängen, eine Bewegung in einem Erfassungsraum vor der Anzeigefläche erfasst werden. Es sind jedoch auch vielfältige andere Bedienvorgänge denkbar, die im Wesentlichen von der Art der Eingabevorrichtung abhängen. Ist mit der Eingabeeinrichtung eine so genannte Gestikerkennung möglich, kann der Bedienvorgang eine von der Hand eines Nutzers ausgeführte Geste umfassen. Handelt es sich bei der Eingabeeinrichtung um ein mechanisches Bedienelement, besteht der Bedienvorgang darin, dieses Bedienelement zu betätigen, z. B. zu drehen oder für eine bestimmte Zeit zu drücken.

Die Listeneinträge der Liste erstrecken sich bei dem erfindungsgemäßen Verfahren perspektivisch in der ersten Richtung nach hinten. Sie können beispielsweise gestaffelt hintereinander in einer geraden Linie oder in einem Bogen perspektivisch dargestellt werden. Dabei verdeckt ein Listeneintrag, der perspektivisch vor einem anderen Listeneintrag dargestellt ist, den anderen Listeneintrag zumindest teilweise. Auf diese Weise können die Listeneinträge vorteilhafterweise so erfasst werden, dass auch auf einer kleinen Anzeigenfläche, wie sie häufig in einem Fahrzeug verwendet wird, relativ viele Listeneinträge dargestellt werden können. Von perspektivisch hinten liegenden Listeneinträgen erkennt der Nutzer dabei beispielsweise nur die Ränder und ggf. ein Teil der Beschriftungen der Listeneinträge.

Bei dem erfindungsgemäßen Verfahren wird nur zu dem perspektivisch vorne dargestellten Listeneintrag die Teilmenge der Elemente dieses einen Listeneintrags angezeigt. Zu den anderen Listeneinträgen werden nicht die zugehörigen Elemente angezeigt. Hierdurch wird erreicht, dass die Darstellung der strukturierten Information nicht zu komplex wird. Der Nutzer kann die auf diese Weise dargestellte Information einfach und schnell erfassen. Die Elemente eines Listeneintrags der Liste können beispielsweise nebeneinander dargestellt werden. Es ergibt sich in diesem Fall dann beispielsweise eine perspektivisch nach hinter verlaufende Liste mit Listeneinträgen und eine Liste mit Elementen des perspektivisch vordersten Listeneintrags, die in einer Reihe nebeneinander angeordnet sind.

Die erfindungsgemäße Vorrichtung zum Bereitstellen einer Benutzerschnittstelle in einem Fahrzeug umfasst eine Anzeigevorrichtung mit einer Anzeigenfläche, einen Speicher zum Speichern einer Liste, die eine Vielzahl von Listeneinträgen umfasst, wobei mehrere Listeneinträge jeweils eine Vielzahl von Elementen umfasst, wobei Teilmengen mit Listeneinträgen und Teilmengen mit Elementen auf der Anzeigefläche anzeigbar sind, eine Eingabevorrichtung, die von einem Nutzer betätigbar ist, um eine angezeigte Teilmenge mit Listeinträgen und eine angezeigte Teilmenge mit Elementen durch einen Bedienvorgang zu verändern, und eine Steuervorrichtung, die mit der Anzeigevorrichtung, dem Speicher und der Eingabevorrichtung gekoppelt ist und mittels welcher die Anzeige auf der Anzeigefläche in Abhängigkeit von einem mittels der Eingabevorrichtung getätigten Bedienvorgang steuerbar ist. Dabei ist mittels der Steuervorrichtung die Anzeigevorrichtung so ansteuerbar ist, dass auf der Anzeigefläche zumindest eine Teilmenge der Liste so angezeigt wird, dass sich eine Vielzahl von Listeneinträgen dieser Liste in einer ersten Richtung auf der Anzeigefläche erstreckt, und zu einem Listeneintrag der angezeigten Vielzahl von Listeneinträgen zumindest eine Teilmenge der Elemente dieses einen Listeneintrags so angezeigt wird, dass sich die Elemente in einer zweiten Richtung auf der Anzeigefläche erstrecken, die sich von der ersten Richtung unterscheidet, und die angezeigte Teilmenge mit Listeneinträgen der Liste durch einen Bedienvorgang des Nutzers mittels der Steuervorrichtung so veränderbar ist, dass die Listeneinträge in der Liste nacheinander durchlaufen werden, wobei der erste Bedienvorgang eine Bedienbewegung in die erste Richtung umfasst, und die angezeigte Teilmenge mit Elemente des einen Listeneintrags durch einen zweiten Bedienvorgang des Nutzers mittels der Steuervorrichtung so veränderbar ist, dass die Elemente des Listeneintrags nacheinander durchlaufen werden, wobei der zweite Bedienvorgang einer Bedienbewegung in die zweite Richtung umfasst. Dabei erstrecken sich die Listeneinträge der Liste perspektivisch in der ersten Richtung nach hinten, wobei die Listeneinträge so perspektivisch dargestellt werden, dass sie gestaffelt hintereinander angeordnet sind, wobei jeder der Listeneinträge die jeweiligen perspektivisch hinter diesem Listeneintrag angeordneten Listeneinträge teilweise verdeckt, so dass von den hinteren Listeneinträgen nur die Ränder sichtbar sind. Die Vorrichtung ist dadurch gekennzeichnet, dass mittels der Steuervorrichtung die Anzeigevorrichtung so ansteuerbar ist, dass nur zu dem perspektivisch vorne dargestellten Listeneintrag die Teilmenge der Elemente dieses einen Listeneintrags angezeigt wird und durch den ersten Bedienvorgang, der eine Wischgeste ist, die angezeigte Teilmenge mit Listeneinträgen der Liste ferner so verändert wird, dass der perspektivisch vorne dargestellte Listeneintrag und die zugehörigen Elemente verschwinden und stattdessen der nächste Listeneintrag perspektivisch im Vordergrund angezeigt wird und die zu diesem nächsten Listeneintrag gehörigen Elemente in der zweiten Richtung auf der Anzeigefläche angezeigt werden, wie zuvor die zu dem perspektivisch vorne dargestellten Listeneintrag gehörigen Elementen angezeigt wurden. I

Die erfindungsgemäße Vorrichtung ist insbesondere so ausgebildet, dass sie die vorstehend beschriebenen Verfahrensschritte teilweise oder vollständig ausführen kann. Die Vorrichtung weist somit auch dieselben Vorteile wie das erfindungsgemäße Verfahren auf.

Die Eingabevorrichtung der erfindungsgemäßen Vorrichtung zum Bereitstellen der Benutzerschnittstelle umfasst beispielsweise eine berührungsempfindliche Oberfläche, die zum Beispiel auf der Anzeigefläche ausgebildet sein kann. Alternativ oder zusätzlich kann sie eine Gestenerfassungseinrichtung aufweisen. Mittels dieser Einrichtung kann der Nutzer die Bedienbewegungen besonders einfach durchführen und in Beziehung zu der Art der Anzeige des Listeneinträge der Liste und der Elemente des Listeneintrags setzen. Auf diese Weise ist eine besonders einfache und intuitive Bedienung der Vorrichtung möglich.

Die Erfindung wird nun anhand eines Ausführungsbeispiels mit Bezug zu den Zeichnungen erläutert.
- Figur 1: zeigt die Anordnung der Anzeigenfläche eines Ausführungsbeispiels der erfindungsgemäßen Vorrichtung im Innenraum eines Fahrzeugs,
- Figur 2: zeigt den Aufbau des Ausführungsbeispiels der erfindungsgemäßen Vorrichtung,
- Figur 3: zeigt schematisch die Anordnung des Ausführungsbeispiels der erfindungsgemäßen Vorrichtung relativ zu einem Nutzer und
- Figur 4: zeigt eine Anzeige, welche von einem Ausführungsbeispiels des erfindungsgemäßen Verfahrens erzeugt wurde.

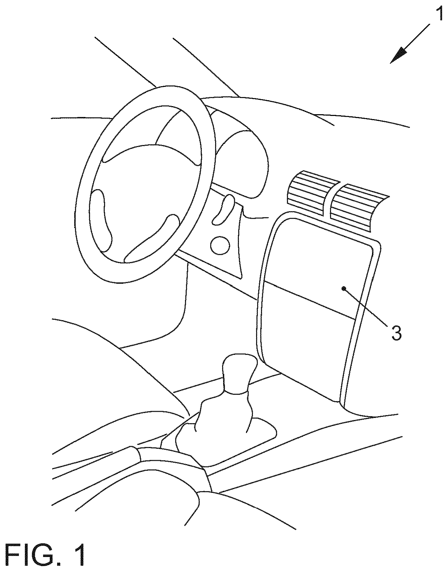

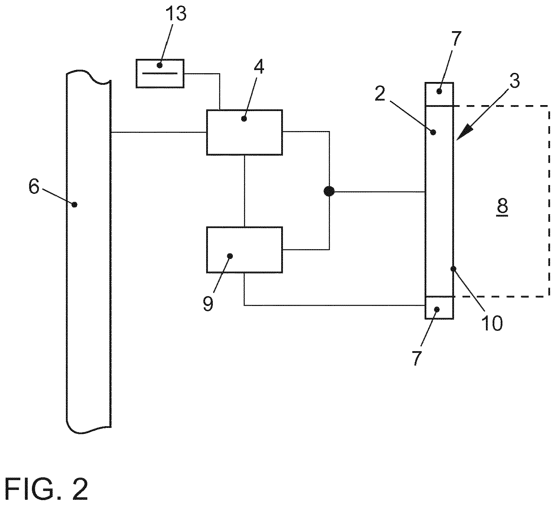

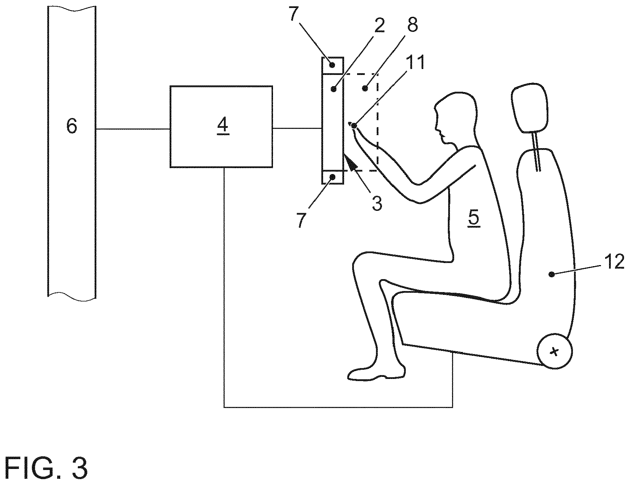

Mit Bezug zu den Figuren 1 bis 3 wird der Aufbau des Ausführungsbeispiels der erfindungsgemäßen Vorrichtung erläutert:
Die Vorrichtung dient der Bereitstellung einer Benutzerschnittstelle in einem Fahrzeug 1. Sie umfasst eine Anzeigevorrichtung 2 mit einer Anzeigefläche 3. Die Anzeigefläche 3 kann von einem Display beliebiger Bauart bereitgestellt werden. Die Anzeigefläche 3 ist so im Innenraum des Fahrzeugs 1 angeordnet, dass sie für zumindest einen Fahrzeuginsassen, insbesondere den Fahrer 5, der auf dem Fahrersitz 12 sitzt, gut sichtbar ist.
Die Anzeigevorrichtung 2 ist mit einer Steuervorrichtung 4 verbunden. Die Steuervorrichtung 4 erzeugt Graphikdaten die mittels der Anzeigefläche 3 im Innenraum des Fahrzeugs 1 für die Fahrzeuginsassen 5 sichtbar wiedergegeben werden.
Die Steuervorrichtung 4 ist ferner mit einem Fahrzeugbus 6 verbunden. Über diese Verbindung kann die Steuervorrichtung 4 bidirektional Daten mit anderen Einrichtungen des Fahrzeugs 1 austauschen. Der Steuervorrichtung 4 können insbesondere Daten übertragen werden, welche die Steuervorrichtung 4 so weiterverarbeitet, dass auf der Anzeigefläche 3 ein Anzeigeinhalt erzeugt wird, welcher den Fahrer 5 bei der Steuerung der Fahrzeugeinrichtungen unterstützt.

Ferner ist die Steuervorrichtung 4 mit einem Speicher 13 verbunden. In dem Speicher 13 sind Informationen gespeichert, die auf der Anzeigefläche 3 angezeigt werden können. Die Steuervorrichtung 4 kann hierfür entsprechende Grafikdaten für die Anzeige auf der Anzeigenfläche 3 erzeugen. Die Informationen sind dabei in dem Speicher 13 so strukturiert, dass Listen gebildet sind. Eine Liste umfasst dabei jeweils eine Vielzahl von Listeneinträgen. Ferner umfassen zumindest einige Listeneinträge Elemente. Ein Listeneintrag ist somit auch eine Liste, die einer anderen Hierarchieebene zugeordnet ist als die Liste mit den Listeneinträgen.

Des Weiteren ist eine Eingabevorrichtung für die Benutzerschnittstelle vorgesehen. Diese umfasst eine Gestenerfassungseinrichtung 7, mit der Gesten eines Nutzers 5 in einem Erfassungsraum 8 erfasst werden können. Der Erfassungsraum 8 ist vor der Anzeigefläche 3 angeordnet. Der Fahrer 5 oder ein anderer Nutzer kann im Erfassungsraum 8 Gesten ausführen, um die Anzeige auf der Anzeigefläche 3 sowie weitere Einrichtungen des Fahrzeugs zu steuern, wie es später erläutert wird.

Die Gestenerfassungseinrichtung 7 kann z. B. Infrarotlichtquellen und Infrarotlichtdetektoren umfassen. Alternativ kann die Gestenerfassungseinrichtung 7 ein optisches System umfassen, welches eine Kamera umfasst, welche die im Erfassungsraum 8 ausgeführte Geste aufnimmt. Des Weiteren kann das optische System eine lichtemittierende Diode umfassen, die z. B. rechteckförmiges amplitudenmoduliertes Licht emittiert. Dieses Licht wird an der Hand eines Nutzers 5, welcher die Geste im Erfassungsraum 8 ausführt, reflektiert und gelangt nach der Reflexion zu einer Photodiode der Gestenerfassungseinrichtung 7. Eine weitere lichtemittierende Diode emittiert ebenfalls rechteckförmiges amplitudenmoduliertes Licht zur Photodiode, welches jedoch um 180° phasenversetzt ist. Bei der Photodiode überlagern sich die beiden Lichtsignale und heben sich auf, falls sie genau die gleiche Amplitude aufweisen. Falls sich die Signale bei der Photodiode nicht aufheben, wird die Lichtemission der zweiten Diode über einen Regelkreis so geregelt, dass sich das Gesamtempfangssignal wieder zu Null ergänzt. Ändert sich die Position der Hand des Nutzers 5 im Erfassungsraum 8, ändert sich auch der Lichtanteil, welcher von der ersten lichtemittierenden Diode zur Photodiode über die Reflexion an der Hand gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an der Hand des Nutzers 5, welcher die Geste ausführt. Auf diese Weise lässt sich aus dem Regelkreis ein Signal ableiten, welches für die Position der Hand des Nutzers 5 charakteristisch ist.

Die Gestenerfassungseinrichtung 7 ist mit der Steuervorrichtung 4 und einer Analyseeinrichtung 9 verbunden. Die Analyseeinrichtung 9 ist ferner mit der Anzeigevorrichtung 2 verbunden. Die Anzeigevorrichtung 2 überträgt den Anzeigeinhalt an die Analyseeinrichtung 9. In Abhängigkeit von dem aktuell angezeigten Anzeigeinhalt ordnet die Analyseeinrichtung 9 der erfassten Geste einen Steuerbefehl zu. Diesen Steuerbefehl überträgt die Analyseeinrichtung 9 an die Steuervorrichtung 4, welche den Steuerbefehl ausführt. Hierfür überträgt die Steuervorrichtung 4 entsprechende Daten an den Fahrzeugbus 6 und/oder ändert den von der Anzeigefläche 3 angezeigten Anzeigeinhalt.

Weitere Details der Gestenerfassungseinrichtung 7 sind in der DE 10 2008 052 485 A1 beschrieben.

Die Eingabevorrichtung kann alternativ oder zusätzlich eine berührungsempfindliche Oberfläche 10 auf der Anzeigefläche 3 umfassen. Es wird somit ein sogenannter Touchscreen bereitgestellt.

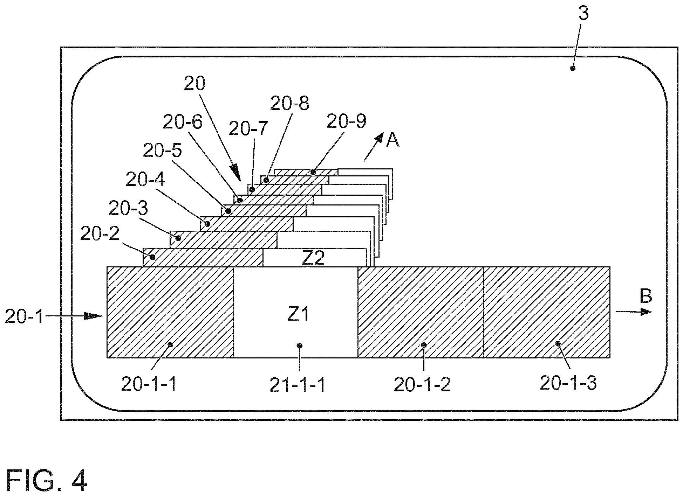

Im folgendem wird ein Ausführungsbeispiel des erfindungsgemäßen Verfahrens zum Bereitstellen einer Benutzerschnittstelle in dem Fahrzeug 1 mit Bezug zu der Figur 4 beschrieben. Das Verfahren kann von der vorstehend beschriebenen Vorrichtung ausgeführt werden.

Die Steuervorrichtung 4 erzeugt Graphikdaten für die Anzeige auf der Anzeigenfläche 3, wie sie in der Figur 4 dargestellt ist. Auf der Anzeigenfläche 3 wird eine Teilmenge der Liste 20, die in dem Speicher 13 gespeichert ist, so angezeigt, dass die Listeneinträge 20-1 bis 20-9 sich auf der Anzeigefläche 3 in einer ersten Richtung A erstrecken. Dabei werden die Listeneinträge 20-1 bis 20-9 so perspektivisch dargestellt, dass sie gestaffelt hintereinander angeordnet sind. Jeder der Listeneinträge 20-1 bis 20-9 verdeckt dabei die jeweiligen perspektivisch hinter diesem Listeneintrag angeordneten Listeneinträge, so dass von den hinteren Listeneinträgen 20-2 bis 20-9 nur die Ränder sichtbar sind. Die Listeneinträge 20-1 bis 20-9 stellen dabei eine echte Teilmenge aller zu der Liste 20 gehörigen Listeneinträge dar.

Zu dem perspektivisch vorne dargestellten Listeneintrag 20-1 werden außerdem die zu diesem Listeneintrag 20-1 gehörigen Elemente zumindest zum Teil angezeigt. In dem in Figur 4 gezeigten Beispiel werden nebeneinander die Elemente 20-1-1, 20-1-2 und 20-1-3 dargestellt. Sie erstrecken sich in die Richtung B auf der Anzeigenfläche 3.

Zu dem Listeneintrag 20-1 wird zusätzlich ein Textfeld 21-1-1 angezeigt, welches den Listeneintrag 20-1 beschreibt. Beispielsweise kann in diesem Textfeld 21-1-1 ein Hinweis auf eine Wiedergabeliste dargestellt sein, zu welcher der Listeneintrag 20-1 gehört, wenn es sich bei den zu der Liste 20 gehörigen Daten um Musikstücke handelt. Entsprechende Textfelder können auch zu den weiteren Listeneinträgen 20-2 bis 20-9 zum Teil verdeckt dargestellt werden.

Der Nutzer 5 kann nun einen Bildlauf bzw. ein Scrollen durch die Listeneinträge 20-1 bis 20-9 der Liste 20 und durch die Elemente eines bestimmten Listeneintrags durch Bedienvorgänge erzeugen, die von der Eingabevorrichtung erfasst werden. Zunächst werden solche Eingabevorgänge beschrieben, die von der Gestenerfassungseinrichtung 7 erfasst und mittels der Analyseeinrichtung 9 ausgewertet werden.

Der Nutzer 5 kann mit seiner Hand oder mit seiner Fingerspitze 11 im Erfassungsraum 8 eine Wischbewegung in einer Richtung ausführen, die der Richtung A auf der Anzeigenfläche 3 entspricht. Die Wischbewegung geht demnach von unten nach schräg oben rechts oder in umgekehrter Richtung. Dieser Wischgeste wird von der Eingabevorrichtung erfasst und an die Steuervorrichtung 4 übertragen. Diese erzeugt daraufhin Graphikdaten, welcher einen Bildlauf innerhalb der Listeneinträge der Liste 20 erzeugen. Wenn beispielsweise eine Wischgeste von oben nach schräg unten links ausgeführt wird, erzeugt die Steuervorrichtung 4 für die Anzeigevorrichtung 2 Graphikdaten welche bewirken, dass der Listeneintrag 20-1 und die zugehörigen Elemente 20-1-1, 20-1-2 und 20-1-3 verschwinden und stattdessen den Listeneintrag 20-2 perspektivisch im Vordergrund angezeigt wird. Ferner erscheint perspektivisch noch hinter dem Listeneintrag 20-9 ein weiterer Listeneintrag der Liste 20. Ferner werden die zu dem Listeneintrag 20-2 gehörigen Elemente in der Richtung B auf der Anzeigefläche 3 angezeigt, wie zuvor die zu dem Listeneintrag 20-1 gehörigen Elementen 20-1-1, 20-1-2, 20-1-3 angezeigt wurden.

Ferner kann der Nutzer 5 eine Wischbewegung von rechts nach links oder von links nach rechts in dem Erfassungsraum 8 ausführen. Ausgehend von der in Figur 4 gezeigten Anzeige werden in diesem Fall Graphikdaten erzeugt, welcher einen Bildlauf innerhalb der Elemente 20-1-1, 20-1-2, 20-1-3 des Listeneintrags 20-1 erzeugen. Bei einer Wischbewegung von rechts nach links verschwindet beispielsweise das Element 20-1-1 und die Elemente 20-1-2 und 20-1-3 rücken um eine Position nach links. Ferner erscheint neben dem Element 20-1-3 ein weiteres Element, welches zu dem Listeneintrag 20-1 gehört. Die Textinformation 21-1-1 bleibt dabei unverändert.

Anstatt Wischbewegungen oder Wischgesten können in entsprechender Weise auch Wischbewegungen oder Wischgesten auf der berührungsempfindlichen Oberflächen 10 der Anzeigefläche 3 ausgeführt werden. Der Nutzer 5 kann beispielsweise mit seiner Fingerspitze 11 die berührungsempfindliche Oberfläche 10 an einer beliebigen Stelle berühren und dann eine Bewegung auf der berührungsempfindlichen Oberfläche 10 in Richtung A oder in Richtung B ausführen. Auch in diesem Fall wird der entsprechende Bildlauf durch die Listeneinträge der Liste 20 oder durch die angezeigten Elemente eines bestimmten Listeneintrags ausgeführt.

### Bezugszeichenliste

- 1: Fahrzeug
- 2: Anzeigevorrichtung
- 3: Anzeigefläche
- 4: Steuervorrichtung
- 5: Nutzer, Fahrer
- 6: Datenbus
- 7: Gestenerfassungseinrichtung
- 8: Erfassungsraum
- 9: Analyseeinrichtung
- 10: berührungsempfindliche Oberfläche
- 11: Betätigungsobjekt, Fingerspitze des Nutzers
- 12: Fahrersitz
- 13: Speicher
- 20: Liste
- 20-1 bis 20-9: Listeneinträge
- 20-1-1 bis 20-1-3: Elemente des Listeneintrags 20-1
- 21-1-1: Textinformation

## Patentansprüche

1. Verfahren zum Bereitstellen einer Benutzerschnittstelle in einem Fahrzeug (1), bei dem Informationen anzeigbar sind, die in Listen strukturiert sind, wobei eine Liste (20) eine Vielzahl von Listeneinträgen (20-1 bis 20-9) umfasst und mehrere Listeneinträge (20-1 bis 20-9) jeweils eine Vielzahl von Elementen (20-1-1 bis 20-1-3) umfasst, bei dem
- auf einer Anzeigefläche (3) zumindest eine Teilmenge der Liste (20) so angezeigt wird, dass eine Vielzahl von Listeneinträgen (20-1 bis 20-9) dieser Liste (20) sich in einer ersten Richtung (A) auf der Anzeigenfläche (3) erstreckt,
- zu einem Listeneintrag (20-1) der angezeigten Vielzahl von Listeneinträgen (20-1 bis 20-9) zumindest eine Teilmenge der Elemente (20-1-1 bis 20-1-3) dieses einen Listeneintrags (20-1) so angezeigt wird, dass sich die Elemente (20-1-1 bis 20-1-3) in einer zweiten Richtung (B) auf der Anzeigefläche (3) erstrecken, die sich von der ersten Richtung (A) unterscheidet,
- die angezeigte Teilmenge mit Listeneinträgen (20-1 bis 20-9) der Liste (20) durch einen ersten Bedienvorgang eines Nutzers (5) so verändert wird, dass die Listeneinträge (20-1 bis 20-9) der Liste (20) nacheinander durchlaufen werden, wobei der erste Bedienvorgang eine Bedienbewegung in die erste Richtung (A) umfasst, und
- die angezeigte Teilmenge mit Elementen (20-1-1 bis 20-1-3) des einen Listeneintrags (20-1) durch einen zweiten Bedienvorgang des Nutzers (5) so verändert wird, dass die Elemente (20-1-1 bis 20-1-3) des Listeneintrages (20-1) nacheinander durchlaufen werden, wobei der zweite Bedienvorgang eine Bedienbewegung in die zweite Richtung (B) umfasst,
- wobei die Listeneinträge (20-1 bis 20-9) der Liste (20) sich perspektivisch in der ersten Richtung (A) nach hinten erstrecken, wobei die Listeneinträge (20 1 bis 20-9) so perspektivisch dargestellt werden, dass sie gestaffelt hintereinander angeordnet sind, wobei jeder der Listeneinträge (20-1 bis 20-9) die jeweiligen perspektivisch hinter diesem Listeneintrag (20-1 bis 20-9) angeordneten Listeneinträge (20-1 bis 20-9) teilweise verdeckt, so dass von den hinteren Listeneinträgen (20-2 bis 20-9) nur die Ränder sichtbar sind,
**dadurch gekennzeichnet, dass**
nur zu dem perspektivisch vorne dargestellten Listeneintrag (20-1) die Teilmenge der Elemente (20-1-1 bis 20-1-3) dieses einen Listeneintrags (20-1) angezeigt wird und durch den ersten Bedienvorgang, der eine Wischgeste ist, die angezeigte Teilmenge mit Listeneinträgen (20-1 bis 20-9) der Liste (20) ferner so verändert wird, dass der perspektivisch vorne dargestellte Listeneintrag (20-1) und die zugehörigen Elemente (20-1-1 bis 20-1-3) verschwinden und stattdessen der nächste Listeneintrag (20-2) perspektivisch im Vordergrund angezeigt wird und die zu diesem nächsten Listeneintrag (20-2) gehörigen Elemente in der zweiten Richtung (B) auf der Anzeigefläche (3) angezeigt werden, wie zuvor die zu dem perspektivisch vorne dargestellten Listeneintrag (20-1) gehörigen Elementen (20-1-1 bis 20-1-3) angezeigt wurden.

2. Verfahren nach Anspruch 1,
**dadurch gekennzeichnet,**
**dass** man durch den ersten Bedienvorgang durch die Listeneinträge (20-1 bis 20-9) der Liste (20) scrollt und durch den zweiten Bedienvorgang durch die Elemente (20-1-1 bis 20-1-3) eines Listeneintrags (20-1) der Liste (20) scrollt.

3. Verfahren einem Anspruch 1 oder 2,
**dadurch gekennzeichnet,**
**dass** bei zumindest einem Bedienvorgang, insbesondere bei beiden Bedienvorgängen, eine Bewegung auf einer berührungsempfindlichen Oberfläche (10) einer Eingabevorrichtung (10; 7, 9) erfasst wird.

4. Verfahren nach einem der vorstehenden Ansprüche,
**dadurch gekennzeichnet,**
**dass** bei zumindest einem Bedienvorgang, insbesondere bei beiden Bedienvorgängen, eine Bewegung in einem Erfassungsraum (8) vor der Anzeigefläche (3) erfasst wird

5. Verfahren nach einem der vorstehenden Ansprüche,
**dadurch gekennzeichnet,**
**dass** die Elemente (20-1-1 bis 20-1-3) des einen Listeneintrags (20-1) der Liste (20) nebeneinander dargestellt werden.

6. Vorrichtung zum Bereitstellen einer Benutzerschnittstelle in einem Fahrzeug (1) mit
- einer Anzeigevorrichtung (2) mit einer Anzeigenfläche (3),
- einem Speicher (13) zum Speichern einer Liste (20), die eine Vielzahl von Listeneinträgen (20-1 bis 20-9) umfasst, wobei mehrere Listeneinträge (20-1 bis 20-9) jeweils eine Vielzahl von Elementen (20-1-1 bis 20-1-3) umfasst, wobei Teilmengen mit Listeneinträgen (20-1 bis 20-9) und Teilmengen mit Elementen (20-1-1 bis 20-1-3) auf der Anzeigefläche (3) anzeigbar sind,
- einer Eingabevorrichtung (10; 7, 9), die von einem Nutzer (5) betätigbar ist, um eine angezeigte Teilmenge mit Listeinträgen (20-1 bis 20-9) und eine angezeigte Teilmenge mit Elementen (20-1-1 bis 20-1-3) durch einen Bedienvorgang zu verändern, und
- einer Steuervorrichtung (4), die mit der Anzeigevorrichtung (2), dem Speicher (13) und der Eingabevorrichtung (10; 7, 9) gekoppelt ist und mittels welcher die Anzeige auf der Anzeigefläche (3) in Abhängigkeit von einem mittels der Eingabevorrichtung (10; 7, 9) getätigten Bedienvorgang steuerbar ist, wobei
- mittels der Steuervorrichtung (4) die Anzeigevorrichtung (2) so ansteuerbar ist, dass auf der Anzeigefläche (3) zumindest eine Teilmenge der Liste (20) so angezeigt wird, dass sich eine Vielzahl von Listeneinträgen (20-1 bis 20-9) dieser Liste (20) in einer ersten Richtung (A) auf der Anzeigefläche (3) erstreckt, und zu einem Listeneintrag (20-1) der angezeigten Vielzahl von Listeneinträgen (20-1 bis 20-9) zumindest eine Teilmenge der Elemente (20-1-1 bis 20-1) dieses einen Listeneintrags (20-1) so angezeigt wird, dass sich die Elemente (20-1-1 bis 20-1-3) in einer zweiten Richtung (B) auf der Anzeigefläche (3) erstrecken, die sich von der ersten Richtung (A) unterscheidet, und
- die angezeigte Teilmenge mit Listeneinträgen (20-1 bis 20-9) der Liste (20) durch einen Bedienvorgang des Nutzers (5) mittels der Steuervorrichtung (4) so veränderbar ist, dass die Listeneinträge (20-1 bis 20-9) in der Liste (20) nacheinander durchlaufen werden, wobei der erste Bedienvorgang eine Bedienbewegung in die erste Richtung (A) umfasst, und die angezeigte Teilmenge mit Elemente (20-1-1 bis 20-1-3) des einen Listeneintrags (20-1) durch einen zweiten Bedienvorgang des Nutzers (5) mittels der Steuervorrichtung (4) so veränderbar ist, dass die Elemente (20-1-1 bis 20-1-3) des Listeneintrags (20-1) nacheinander durchlaufen werden, wobei der zweite Bedienvorgang einer Bedienbewegung in die zweite Richtung (B) umfasst,
- wobei die Listeneinträge (20-1 bis 20-9) der Liste (20) sich perspektivisch in der ersten Richtung (A) nach hinten erstrecken, wobei die Listeneinträge (20 1 bis 20-9) so perspektivisch dargestellt werden, dass sie gestaffelt hintereinander angeordnet sind, wobei jeder der Listeneinträge (20-1 bis 20-9) die jeweiligen perspektivisch hinter diesem Listeneintrag (20-1 bis 20-9) angeordneten Listeneinträge (20-1 bis 20-9) teilweise verdeckt, so dass von den hinteren Listeneinträgen (20-2 bis 20-9) nur die Ränder sichtbar sind,
**dadurch gekennzeichnet, dass** mittels der Steuervorrichtung (4) die Anzeigevorrichtung (2) so ansteuerbar ist, dass nur zu dem perspektivisch vorne dargestellten Listeneintrag (20-1) die Teilmenge der Elemente (20-1-1 bis 20-1-3) dieses einen Listeneintrags (20-1) angezeigt wird und durch den ersten Bedienvorgang, der eine Wischgeste ist, die angezeigte Teilmenge mit Listeneinträgen (20-1 bis 20-9) der Liste (20) ferner so verändert wird, dass der perspektivisch vorne dargestellte Listeneintrag (20-1) und die zugehörigen Elemente (20-1-1 bis 20-1-3) verschwinden und stattdessen der nächste Listeneintrag (20-2) perspektivisch im Vordergrund angezeigt wird und die zu diesem nächsten Listeneintrag (20-2) gehörigen Elemente in der zweiten Richtung (B) auf der Anzeigefläche (3) angezeigt werden, wie zuvor die zu dem perspektivisch vorne dargestellten Listeneintrag (20-1) gehörigen Elementen (20-1-1 bis 20-1-3) angezeigt wurden.

7. Vorrichtung nach Anspruch 6,
**dadurch gekennzeichnet,**
**dass** die Eingabevorrichtung (10; 7, 9) eine berührungsempfindliche Oberfläche (10) und/oder Gestenerfassungseinrichtung (7) umfasst

8. Fahrzeug mit einer Vorrichtung nach einem Anspruch 6 oder 7.

## Claims

1. Method for providing a user interface in a vehicle (1), in which information that is structured in lists can be displayed, wherein a list (20) comprises a multiplicity of list entries (20-1 to 20-9) and a plurality of list entries (20-1 to 20-9) each comprise a multiplicity of items (20-1-1 to 20-1-3), in which
- a display panel (3) is used to display at least one subset of the list (20) such that a multiplicity of list entries (20-1 to 20-9) in this list (20) extend in a first direction (A) on the display panel (3),
- a list entry (20-1) from the displayed multiplicity of list entries (20-1 to 20-9) has at least one subset of the items (20-1-1 to 20-1-3) in this one list entry (20-1) displayed for it such that the items (20-1-1 to 20-1-3) extend in a second direction (B) on the display panel (3), which direction is different from the first direction (A),
- the displayed subset containing list entries (20-1 to 20-9) in the list (20) is altered by a first operator control process by a user (5) such that the list entries (20-1 to 20-9) in the list (20) are moved through in succession, wherein the first operator control process comprises an operator control movement in the first direction (A), and
- the displayed subset containing items (20-1-1 to 20-1-3) in the one list entry (20-1) is altered by a second operator control process by the user (5) such that the items (20-1-1 to 20-1-3) in the list entry (20-1) are moved through in succession, wherein the second operator control process comprises an operator control movement in the second direction (B),
- wherein the list entries (20-1 to 20-9) in the list (20) extend to the rear in the first direction (A) from a perspective point of view, wherein the list entries (20-1 to 20-9) are shown from a perspective point of view such that they are arranged in staggered succession, wherein each of the list entries (20-1 to 20-9) partly conceals the respective list entries (20-1 to 20-9) arranged behind this list entry (20-1 to 20-9) from a perspective point of view, which means that only the edges of the rear list entries (20-2 to 20-9) are visible,
**characterized in that**
only the list entry (20-1) that is shown at the front from a perspective point of view has the subset of the items (20-1-1 to 20-1-3) in this one list entry (20-1) displayed for it, and the first operator control process, which is a swipe gesture, furthermore alters the displayed subset containing list entries (20-1 to 20-9) in the list (20) such that the list entry (20-1) shown at the front from a perspective point of view and the associated items (20-1-1 to 20-1-3) disappear and instead the next list entry (20-2) is displayed in the foreground from a perspective point of view and the items associated with this next list entry (20-2) are displayed on the display panel (3) in the second direction (B), as the items (20-1-1 to 20-1-3) associated with the list entry (20-1) shown at the front from a perspective point of view were displayed previously.

2. Method according to Claim 1,
**characterized**
**in that** the first operator control process is used to scroll through the list entries (20-1 to 20-9) in the list (20) and the second operator control process is used to scroll through the items (20-1-1 to 20-1-3) in a list entry (20-1) in the list (20) .

3. Method according to Claim 1 or 2,
**characterized**
**in that** at least one operator control process, particularly both operator control processes, involve(s) a movement on a touch-sensitive surface (10) of an input apparatus (10; 7, 9) being sensed.

4. Method according to one of the preceding claims,
**characterized**
**in that** at least one operator control process, particularly both operator control processes, involve (s) a movement in a sensing space (8) in front of the display panel (3) being sensed.

5. Method according to one of the preceding claims,
**characterized**
**in that** the items (20-1-1 to 20-1-3) in the one list entry (20-1) in the list (20) are shown next to one another.

6. Apparatus for providing a user interface in a vehicle (1), having
- a display apparatus (2) having a display panel (3),
- a memory (13) for storing a list (20) that comprises a multiplicity of list entries (20-1 to 20-9), wherein a plurality of list entries (20-1 to 20-9) each comprise a multiplicity of items (20-1-1 to 20-1-3), wherein subsets containing list entries (20-1 to 20-9) and subsets containing items (20-1-1 to 20-1-3) can be displayed on the display panel (3),
- an input apparatus (10; 7, 9) that can be operated by a user (5) in order to alter a displayed subset containing list entries (20-1 to 20-9) and a displayed subset containing items (20-1-1 to 20-1-3) by means of an operator control process, and
- a control apparatus (4) that is coupled to the display apparatus (2), to the memory (13) and to the input apparatus (10; 7, 9) and by means of which the display on the display panel (3) can be controlled on the basis of an operator control process performed by means of the input apparatus (10; 7, 9), wherein
- the control apparatus (4) can be used to actuate the display apparatus (2) such that the display panel (3) is used to display at least one subset of the list (20) such that a multiplicity of list entries (20-1 to 20-9) in this list (20) extend in a first direction (A) on the display panel (3), and a list entry (20-1) from the displayed multiplicity of list entries (20-1 to 20-9) has at least one subset of the items (20-1-1 to 20-1) in this one list entry (20-1) displayed for it such that the items (20-1-1 to 20-1-3) extend in a second direction (B) on the display panel (3), which direction is different from the first direction (A), and
- the displayed subset containing list entries (20-1 to 20-9) in the list (20) can be altered by an operator control process by the user (5) by means of the control apparatus (4) such that the list entries (20-1 to 20-9) in the list (20) are moved through in succession, wherein the first operator control process comprises an operator control movement in the first direction (A), and the displayed subset containing items (20-1-1 to 20-1-3) in the one list entry (20-1) can be altered by a second operator control process by the user (5) by means of the control apparatus (4) such that the items (20-1-1 to 20-1-3) in the list entry (20-1) are moved through in succession, wherein the second operator control process comprises an operator control movement in the second direction (B),
- wherein the list entries (20-1 to 20-9) in the list (20) extend to the rear in the first direction (A) from a perspective point of view, wherein the list entries (20-1 to 20-9) are shown from a perspective point of view such that they are arranged in staggered succession, wherein each of the list entries (20-1 to 20-9) partly conceals the respective list entries (20-1 to 20-9) arranged behind this list entry (20-1 to 20-9) from a perspective point of view, which means that only the edges of the rear list entries (20-2 to 20-9) are visible,
**characterized in that**
the control apparatus (4) can be used to actuate the display apparatus (2) such that only the list entry (20-1) that is shown at the front from a perspective point of view has the subset of the items (20-1-1 to 20-1-3) in this one list entry (20-1) displayed for it, and the first operator control process, which is a swipe gesture, furthermore alters the displayed subset containing list entries (20-1 to 20-9) in the list (20) such that the list entry (20-1) shown at the front from a perspective point of view and the associated items (20-1-1 to 20-1-3) disappear and instead the next list entry (20-2) is displayed in the foreground from a perspective point of view and the items associated with this next list entry (20-2) are displayed on the display panel (3) in the second direction (B), as the items (20-1-1 to 20-1-3) associated with the list entry (20-1) shown at the front from a perspective point of view were displayed previously.

7. Apparatus according to Claim 6,
**characterized**
**in that** the input apparatus (10; 7, 9) comprises a touch-sensitive surface (10) and/or gesture sensing device (7).

8. Vehicle having an apparatus according to either of Claims 6 and 7.

## Revendications

1. Procédé de fourniture d'une interface utilisateur dans un véhicule (1) dans lequel peuvent être affichées des informations qui sont structurées dans des listes, une liste (20) comprenant une pluralité d'entrées de liste (20-1 à 20-9) et la pluralité d'entrées de liste (20-1 à 20-9) comprenant chacune une pluralité d'éléments (20-1-1 à 20-1-3), dans lequel
- au moins un sous-ensemble de la liste (20) est affiché sur une zone d'affichage (3) de telle sorte qu'une pluralité d'entrées de liste (20-1 à 20-9) de cette liste (20) s'étendent dans une première direction (A) sur la zone d'affichage (3),
- pour une entrée de liste (20-1) de la pluralité d'entrées de liste affichées (20-1 à 20-9) au moins un sous-ensemble des éléments (20-1-1 à 20-1-3) de cette entrée de liste (20-1) est indiqué de telle sorte que les éléments (20-1-1 à 20-1-3) s'étendent sur la zone d'affichage (3) dans une deuxième direction (B) qui est différente de la première direction (A),
- le sous-ensemble affiché comprenant les entrées de liste (20-1 à 20-9) de la liste (20) est modifié par une première opération de commande d'un utilisateur (5) de sorte que les entrées de liste (20-1 à 20-9) de la liste (20) soient parcourues les unes après les autres, la première opération de commande comprenant un mouvement de commande dans la première direction (A), et
- le sous-ensemble affiché comprenant les éléments (20-1-1 à 20-1-3) d'une entrée de liste (20-1) est modifié par une deuxième opération de commande de l'utilisateur (5) de sorte que les éléments (20-1-1 à 20-1-3) de l'entrée de liste (20-1) soient parcourus les uns après les autres, la deuxième opération de commande comprenant un mouvement de commande dans la deuxième direction (B),
- les entrées de liste (20-1 à 20-9) de la liste (20) s'étendant en perspective vers l'arrière dans la première direction (A), les entrées de liste (20-1 à 20-9) étant affichées en perspective de manière à être décalées les unes derrière les autres, chacune des entrées de liste (20-1 à 20-9) couvrant partiellement les entrées de liste respectives (20-1 à 20-9) disposées en perspective derrière cette entrée de liste (20-1 à 20-9) de sorte que les bords ne soient visibles que depuis les entrées de liste arrière (20-2 à 20-9),
**caractérisé en ce que**
le sous-ensemble des éléments (20-1-1 à 20-1-3) de cette entrée de liste (20-1) n'est affiché que pour l'entrée de liste (20-1) représentée en perspective vers l'avant et le sous-ensemble affiché comprenant les entrées de liste (20-1 à 20-9) de la liste (20) est en outre modifié par la première opération de commande, qui est un geste de balayage, de sorte que l'entrée de liste (20-1) représentée vers l'avant en perspective et les éléments associés (201-1 à 20-1-3) disparaissent et à la place l'entrée de liste suivante (20-2) est affichée en perspective au premier plan et les éléments appartenant à cette entrée de liste suivante (20-2) sont affichés dans la deuxième direction (B) sur la zone d'affichage (3), comme l'était auparavant l'entrée de liste (20-1) associée aux éléments (20-1-1 à 20-1-3) représentés en perspective vers l'avant.

2. Procédé selon la revendication 1,
**caractérisé en ce que**
l'on fait défiler les entrées de liste (20-1 à 20-9) de la liste (20) avec la première opération de commande et l'on fait défiler les éléments (20-1-1 à 20-1-3) d'une entrée de liste (20-1) de la liste (20) avec la deuxième opération de commande.

3. Procédé selon la revendication 1 ou 2,
**caractérisé en ce que**
un mouvement sur une surface tactile (10) d'un dispositif d'entrée (10 ; 7, 9) est détecté lors d'au moins une opération de commande, en particulier lors des deux opérations de commande.

4. Procédé selon l'une des revendications précédentes,
caractérisé en que
un mouvement est détecté dans un espace de détection (8) devant la zone d'affichage (3) lors d'au moins une opération de commande, en particulier lors des deux opérations de commande.

5. Procédé selon l'une des revendications précédentes,
**caractérisé en ce que**
les éléments (20-1-1 à 20-1-3) d'une entrée de liste (20-1) de la liste (20) sont affichés les uns à côté des autres.

6. Dispositif de fourniture d'une interface utilisateur dans un véhicule (1), ledit dispositif comprenant
- un dispositif d'affichage (2) pourvu d'une zone d'affichage (3),
- une mémoire (13) destinée à mémoriser une liste (20) qui comprend une pluralité d'entrées de liste (20-1 à 20-9), une pluralité d'entrées de liste (20-1 à 20-9) comprenant chacune une pluralité d'éléments (20-1-1 à 20-1-3), des sous-ensembles comprenant des entrées de liste (20-1 à 20-9) et des sous-ensembles comprenant des éléments (20-1-1 à 20-1-3) étant affichés sur la zone d'affichage (3),
- un dispositif d'entrée (10 ; 7, 9) qui peut être actionné par un utilisateur (5) pour modifier un sous-ensemble affiché comprenant des entrées de liste (20-1 à 20-9) et un sous-ensemble affiché comprenant des éléments (20-1-1 à 20-1-3) par une opération de commande, et
- un dispositif de commande (4) qui est couplé au dispositif d'affichage (2), à la mémoire (13) et au dispositif d'entrée (10 ; 7, 9) et qui permet de commander l'affichage sur la zone d'affichage (3) en fonction d'une opération de commande mise en œuvre à l'aide du dispositif d'entrée (10 ; 7, 9),
- le dispositif d'affichage (2) pouvant être commandé à l'aide du dispositif de commande (4) de telle sorte qu'au moins un sous-ensemble de la liste (20) soit affiché sur la zone d'affichage (3) de telle sorte qu'une pluralité d'entrées de liste (20-1 à 20-9) de cette liste (20) s'étende dans une première direction (A) sur la zone d'affichage (3), et, pour une entrée de liste (20-1) de la pluralité affichée d'entrées de liste (20-1 à 20-9), au moins un sous-ensemble des éléments (20-1-1 à 20-1) de cette entrée de liste (20-1) soit affiché de sorte que les éléments (20-1-1 à 20-1-3) s'étendent sur la zone d'affichage (3) dans une deuxième direction (B) qui est différente de la première direction (A), et
- le sous-ensemble affiché comprenant les entrées de liste (20-1 à 20-9) de la liste (20) pouvant être modifié par une opération de commande de l'utilisateur (5) à l'aide du dispositif de commande (4) de sorte que les entrées de liste (20-1 à 20-9) soient parcourus les unes après les autres dans la liste (20), la première opération de commande comprenant un mouvement de commande dans la première direction (A), et le sous-ensemble affiché comprenant des éléments (20-1-1 à 20-1-3) d'une entrée de liste (20-1) pouvant être modifié par une deuxième opération de commande par l'utilisateur (5) à l'aide du dispositif de commande (4) de sorte que les éléments (20-1-1 à 20-1-3) de l'entrée de liste (20-1) soient parcourus les uns après les autres, la deuxième opération de commande comprenant un mouvement de commande dans la deuxième direction (B),
- les entrées de liste (20-1 à 20-9) de la liste (20) s'étendant en perspective vers l'arrière dans la première direction (A), les entrées de liste (20 1 à 20-9) étant représentées en perspective de manière à être décalées les unes derrière les autres, chacune des entrées de liste (20-1 à 20-9) couvrant partiellement les entrées de liste respectives (20-1 à 20-9) disposées en perspective derrière cette entrée de liste (20-1 à 20-9) de sorte que seuls les bords soient visibles depuis les entrées de liste (20-2 jusqu'à 20-9),
**caractérisé en ce que**
le dispositif d'affichage (2) peut être commandé à l'aide du dispositif de commande (4) de sorte que le sous-ensemble des éléments (20-1-1 à 20-1-3) de cette entrée de liste (20-1) soit affiché seulement pour l'entrée de liste (20-1) représentée en perspective vers l'avant et que le sous-ensemble affiché comprenant les entrées de liste (20-1 à 20-9) de la liste (20) soit en outre modifié par la première opération de commande, qui est un geste de balayage de sorte que l'entrée de liste (20-1) et les éléments associés (20-1-1 à 20-1-3) disparaissent et à la place l'entrée de liste suivante (20-2) soit affichée en perspective au premier plan et les éléments appartenant à cette entrée de liste suivante (20-2) soient affichés dans la deuxième direction (B) sur la zone d'affichage (3) comme étaient affichés les éléments (20-1-1 à 20-1-3) appartenant à l'entrée de liste (20-1) représentée en perspective vers l'avant.

7. Dispositif selon la revendication 6,
**caractérisé en ce que**
le dispositif d'entrée (10 ; 7, 9) comprend une surface tactile (10) et/ou un moyen de détection de gestes (7).

8. Véhicule comprenant un dispositif selon la revendication 6 ou 7.
